# EUROPEAN PATENT APPLICATION

(11) **EP 4 682 794 A1**
(43) Date of publication of application: **21.01.2026**
(21) Application number: 24275085.9
(22) Date of filing: 17.07.2024
(51) Int. Cl.: G06Q 10/08, B64D 11/00, B64F 1/36, G06Q 50/40

(54) **BOARDING PASSENGER AIRCRAFT**

(71) Applicant: ARINC Incorporated, Annapolis, MD 21401 (US)
(72) Inventor: Chapman, Anthony John, Annapolis (US); Sebastio, Stefano, Cork (IE)
(74) Representative: Dehns

(57) **Abstract**

A system 100 for assisting boarding of a passenger aircraft is provided. The system comprises a sensor device 102 arranged to capture sensor data relating to one or more passengers 4 boarding the aircraft and a processing device 104. The processing device is arranged to obtain information relating to the aircraft, use the sensor data to identify one or more luggage items 6 carried by the one or more passengers and estimate a size of each of the one or more luggage items, process the estimated sizes of the one or more luggage items and the information relating to the aircraft using a machine learning algorithm to determine a prediction of whether the luggage capacity in a cabin of the aircraft will be exceeded when all passengers have boarded, and trigger the performance of one or more actions which influence the boarding of the aircraft based on said prediction.

## Description

### Technical Field

The present disclosure relates to methods for boarding passenger aircraft and systems for assisting said boarding.

### Background

Passenger aircraft typically feature a cargo hold separate to the passenger cabin in which cargo and passenger luggage can be stored during flight. Passengers normally check-in any bags they wish to store in the cargo hold on upon arriving at the airport. Passengers can typically also bring luggage inside the cabin for storage in dedicated overhead luggage compartments or under the passenger seats.

The check in process at the departure airport and luggage reclaiming or transfer process at destination or transit airports can be inconvenient and stressful for passengers. Therefore, many passengers do not check in bags but instead maximise their carry-on luggage allowance.

The available storage inside the cabin of the aircraft is often insufficient to every passenger on a full flight to use their entire carry-on allowance. Many of the overhead luggage compartments can become full before every passenger has boarded. This can cause confusion and delays as later passengers struggle to store their bags and have to belatedly check them into the hold.

Some airlines attempt to mitigate this by monitoring manually how quickly the overhead compartments are filling up as passengers board (e.g. by airline gate agents constantly entering the aircraft to perform a physical count of remaining space), or by imposing severe limits on the size and number of bags being brought into the cabin. However, these approaches can be labour intensive and often result in an inefficient boarding process.

An improved approach may be desired.

### Summary

According to a first aspect of the present disclosure there is provided a system for assisting boarding of a passenger aircraft, the system comprising:
a sensor device arranged to capture sensor data relating to one or more passengers boarding the aircraft;
a processing device arranged to:
   obtain information relating to the aircraft;
   use the sensor data to identify one or more luggage items carried by the one or more passengers and estimate a size of each of the one or more luggage items;
   process the estimated sizes of the one or more luggage items and the information relating to the aircraft using a machine learning algorithm to determine a prediction of whether the luggage capacity in a cabin of the aircraft will be exceeded when all passengers have boarded; and
   trigger the performance of one or more actions which influence the boarding of the aircraft based on said prediction.

According to a second aspect of the present disclosure there is provided a method of boarding a passenger aircraft, the method comprising:
obtaining information relating to the aircraft;
capturing sensor data relating to one or more passengers boarding the aircraft;
using the sensor data to identify one or more luggage items carried by the one or more passengers and estimate a size of each of the one or more luggage items;
processing the estimated sizes of the one or more luggage items and the information relating to the aircraft using a machine learning algorithm to determine a prediction of whether a luggage capacity in a cabin of the aircraft will be exceeded when all passengers have boarded; and
performing one or more actions which influence the boarding of the aircraft based on said prediction.

It will be recognised by those skilled in the art that predicting whether the luggage capacity in a cabin of the aircraft will be exceeded based on the sensor data can help to mitigate disruption associated with cabin storage becoming full before all passengers have boarded the aircraft and potentially at a very early stage of boarding. Examples of the present disclosure can thus facilitate quicker and smoother boarding of the aircraft.

Examples of the present disclosure may be useful because it is generally hard for airport staff to tell in advance of boarding whether the cabin storage of the aircraft will be sufficient for everyone's luggage. For instance, the volume and types of luggage carried by passengers can vary substantially from flight-to-flight, e.g. depending on the time and/or date, the origin and/or destination of a route being flown by the aircraft and the airline operating the aircraft. Cabin luggage brought by passengers also comes in a wide variety of shapes and sizes making manual estimation of its cumulative volume very difficult.

Because examples of the present disclosure *predict* whether the luggage capacity in a cabin of the aircraft will be exceeded, rather than simply identifying when the sum of detected luggage items has reached or is about to reach a set limit, actions to avoid a predicted excess of luggage can be taken pre-emptively. This may allow the use of less disruptive actions than would be required if the excess were only detected after-the-event. For instance, airport staff may begin to enforce stricter luggage allowances for passengers boarding in response to an early prediction that the luggage capacity will be exceeded. This may be contrasted to more severe measures such as mandating that subsequent passengers check in all bags taken in response to a determination that the cabin storage is already or will imminently be completely full.

Conversely, if the prediction indicates that the luggage capacity will not be exceeded, airport staff may be able to relax increased luggage restrictions that were presumed to be needed for the flight.

Thus, by producing a prediction whether the luggage capacity will be exceeded, more passengers may be able to bring their bags into the cabin and fewer bags (e.g. only the largest bags) may need to be checked into the hold of the aircraft, speeding up the boarding process and improving the passenger experience.

In a set of examples, the sensor device is arranged to capture the sensor data as or after passengers pass through a boarding threshold, e.g. at or after a departure gate checkpoint (e.g. a manual check or an automated barrier). The boarding threshold may lead directly to an aircraft (e.g. via a jet bridge) or to an intermediate location such as a bus that will take passengers to the aircraft. Sensing passengers at or after a boarding threshold may ensure that each passenger is only sensed once and that the passengers being sensed are indeed boarding the aircraft in question. However, in some examples the sensor data may be captured earlier in a passengers journey to board the aircraft.

In a set of examples, the sensor device comprises an imaging device such as a camera (e.g. a stills camera or a video camera). The sensor device may form part of a closed circuit television CCTV network, e.g. part of a broader airport CCTV network. The sensor device may comprise multiple sensing elements (e.g. multiple imaging devices). In some examples, the system comprises a plurality of sensor devices arranged to capture sensor data relating to one or more passengers boarding the aircraft. The sensor devices may be of the same or different type (e.g. comprising one or more video cameras alongside one or more depth sensors). Sensor data from one, some or all of the plurality of sensor devices may be used to identify and estimate a size of luggage items.

Actions performed based on a prediction that the luggage capacity will be exceeded may include, but are not limited to, issuing an update, warning or alert to airport staff (e.g. in response to which the staff may implement one or more pre-emptive measures to reduce cabin luggage), making one or more automatic passenger announcements (e.g. to encourage the voluntary checking-in of cabin bags and/or to inform passengers of a reduced luggage allowance) or causing the boarding process to be paused.

Conversely, actions performed based on a prediction that the luggage capacity will not be exceeded may include issuing an update, warning or alert to airport staff (e.g. in response to which the staff may relax one or more limits on cabin luggage) or making one or more automatic passenger announcements. Not all predictions may result in an action being triggered.

The system may comprise a user interface that can be controlled by the processing device to issue visual or audible update, warning or alert in response to the prediction. The user interface may comprise an electronic display or speaker. The user interface may comprise a mobile device, e.g. carried by airport staff.

In a set of examples, the prediction is determined using sensor data relating to less than 75% of a total number of passengers boarding the aircraft, less than 50% of a total number of passengers boarding the aircraft, less than 25% of a total number of passengers boarding the aircraft or even less than 10% of a total number of passengers boarding the aircraft. In other words, the prediction may be based on sensing only a small proportion of the total passengers who ultimately board the aircraft.

The machine learning algorithm may take into account a boarding status (e.g. a number or proportion of passengers that have boarded) when determining the prediction. The sensor data may be used to determine or update the boarding status (e.g. to maintain a cumulative total of boarded passengers), or this information may be obtained from elsewhere (e.g. a separating boarding management system).

In a set of examples, the prediction may be determined using sensor data relating to a sample of passengers, such as a leading set of passengers (i.e. the or some of the first people to board the aircraft). For instance, the sample of passengers may comprise the first 5 passengers, the first 10 passengers, the first 20 passengers or the first 50 passengers to board the aircraft. Determining the prediction based on early passengers can allow for early pre-emptive action to be taken if necessary. In some examples, the sample of passengers used for the prediction may be configurable, e.g. to allow an airline to exclude from the sample passengers that board the aircraft early but are unrepresentative of later passengers such as passengers needing assistance, children, first class passengers, frequent flyers. The sample of passengers may be selected based on a ticket class or boarding group of passengers (e.g. including a leading set of economy class passengers to board the aircraft whilst excluding business or first class passengers).

As more passengers board, additional sensor data can be collected relating to these passengers, which may be used to refine an earlier prediction. In a set of examples, further sensor data is captured relating to one or more further passengers. This further sensor data may be used to identify one or more further luggage items carried by the one or more further passengers and estimate a size of each of the one or more further luggage items. One or more additional predictions (e.g. refined predictions) may be determined by processing estimated sizes of luggage items (including the estimated sizes of the one or more further luggage items) and the information relating to the aircraft using the machine learning algorithm. One or more actions may be triggered based on refined predictions. In some examples, the system is arranged to repeatedly refine the prediction using sensor data relating to each of a plurality of subsequent passengers.

In examples where one or more additional predictions are determined, these predictions may take into account one or more actions that have been performed in response to a previous prediction. In other words, information relating to one or more prior actions may be processed by the machine learning algorithm when determining an additional prediction. For instance, if a previous prediction triggered a reduction in a cabin luggage allowance, this may be taken into account when determining a subsequent prediction. A reduced cabin allowance may cause a previous prediction that the luggage capacity will be exceeded to be refined to a prediction that luggage capacity will not be exceeded.

When only a low number of passengers has been captured by the sensor, the determined prediction may have a large uncertainty, e.g., due to inherent variation in the types and sizes of luggage carried by passengers. However, as more sensor data is captured, the confidence level of the prediction may increase, e.g. as patterns or trends in the types or sizes of luggage being carried become more apparent. In some examples, the machine learning algorithm is arranged to produce a confidence level with each prediction. The one or more actions which influence the boarding of the aircraft may be based in part on confidence level of the prediction.

In a set of examples, identifying luggage items carried by the passenger comprises processing the sensor data with an algorithm such as a computer vision algorithm. In some examples, additionally or alternatively, estimating a size of each of the luggage items comprises processing the sensor data with an algorithm such as a computer vision algorithm. The identification and size estimation may be determined together (e.g. by a single computer vision algorithm), or the identification and size estimation may be carried out separately.

The estimated size of each of the luggage items may consist of a single measurement, e.g. an estimated maximum length, width or height of the luggage item, or an estimated footprint, surface area or volume of the luggage item. Using a single value to characterise the estimated size of the luggage may still provide sufficient information for a good prediction whilst simplifying the processing. Alternatively, the estimated size of each of the luggage items may comprise a plurality of measurements, e.g., two or more of an estimated maximum length, width and height of the luggage item, an estimated footprint, surface area or volume of the luggage item. Processing the estimated sizes of the one or more luggage items may comprise processing each estimated size separately (e.g. as separate inputs to the machine learning algorithm) and/or processing a cumulative total size (e.g. a cumulative total volume) of all estimated sizes (e.g. with the cumulative total size being a single input to the machine learning algorithm).

In a set of examples, the sensor data is used to identify a type of each item luggage. For instance, it may be identified whether an item of luggage is a rucksack, a briefcase, a hard-shell suitcase or a soft-shell suitcase. The identified type of luggage may be taken into account by the machine learning algorithm when determining the prediction. This may improve the accuracy of the prediction, because different types of luggage may be stored in different areas of the cabin (e.g. under seats or in overhead compartments) and/or with different packing densities.

The information relating to the aircraft may comprise one or more details of the aircraft itself, such as cabin luggage capacity information; aircraft type information; individual aircraft identification information; operating airline. Additionally or alternatively, the information relating to the aircraft may comprise one or more details of a flight that the aircraft is about to perform, such as flight departure time and/or date; flight arrival time and/or date; flight destination; flight duration; number of booked passengers; number of checked-in bags. It has been found that any and all of these factors can impact whether a luggage capacity in a cabin of the aircraft will be exceeded and are thus useful to take into account when determining the prediction.

In some examples, additionally or alternatively, the information relating to the aircraft comprises one or more details of one or more flights that have been previously performed (i.e. historical flight data). The historical flight data may, for instance, include information on whether or how quickly a luggage capacity in a cabin of an aircraft performing a previous flight was filled. The historical flight data may relate to a previous flight that is the same as a flight that the aircraft is about to perform (e.g. between the same airports), or similar to a flight that the aircraft is about to perform (e.g. between the same cites, regions, or countries). The previous flight may have been performed on a previous day, previous week, previous month, or in the same or similar season in a previous year. The previous flight may have been performed by the same or a similar aircraft type.

The information relating to the aircraft may be obtained from an external source (e.g. from a remote server accessed via the internet or via an internal airport data network). The external source may comprise a departure control system or a similar airport management system. Additionally or alternatively, the information relating to the aircraft may be obtained using a user input (e.g. to a user interface of the system).

The user input may comprise the information used by the machine learning algorithm or said information may be derived from the user input. For instance, a user may input directly cabin luggage capacity information, or a user input may identify the type of aircraft or specific aircraft being used (e.g. with a flight number or an aircraft tail number), and relevant aircraft information can then be derived from this input, e.g. by consulting a database stored locally or remotely.

In a set of examples, the machine learning algorithm is a neural network. The neural network may be defined at least partially by one or more weights, biases and activation functions. The neural network may comprise an input layer that receives the estimated size of one or more luggage items (and/or a cumulative size) and the information relating to the aircraft as inputs. The neural network may comprise an output layer which outputs the prediction of whether the luggage capacity in a cabin of the aircraft will be exceeded when all passengers have boarded, e.g. as a binary yes/no output or as a continuous value indicating a probability of whether the luggage capacity in a cabin of the aircraft will be exceeded. The neural network may comprise one or more hidden layers in between the input and output layers. One or more parameters of the machine learning algorithm may be based on a model used for a previous flight. A previous model may be used as a starting reference.

The machine-learning algorithm may be trained using any appropriate learning technique (e.g. supervised, unsupervised, semi-supervised, reinforcement). In a set of examples, the machine-learning algorithm is trained using training data comprising a series of sizes of luggage items, information relating to an aircraft, and an indication of whether said luggage items exceed a luggage capacity in a cabin of the aircraft. The training data may comprise a set of several such examples, i.e. several series of luggage item sizes, information relating to aircraft onto which each series of luggage items were brought and an indication of whether each series of luggage items exceeded a luggage capacity in a cabin of the aircraft.

The information relating to aircraft in the training data may comprise one or more of: cabin luggage capacity information; aircraft type information; individual aircraft identification information; operating airline; flight departure time and/or date; flight arrival time and/or date; flight destination; flight duration. The training data may be simulated and/or derived from observations of previous aircraft boarding processes (e.g. historical flight data).

As explained above, the prediction may simply be the output of the machine learning model. However, in some examples, the prediction is determined by combining an output of the machine learning model with additional information, e.g. using one or more inference rules. For instance, an output from the machine learning model (e.g. a preliminary prediction of whether the luggage capacity in a cabin of the aircraft will be exceeded when all passengers have boarded) may be combined with historical flight data (e.g. whether the luggage capacity was exceeded on a similar previous flight) to determine the prediction. This hybrid approach may lead to more accurate predictions.

Features of any aspect or example described herein may, wherever appropriate, be applied to any other aspect or example described herein. Where reference is made to different examples, it should be understood that these are not necessarily distinct but may overlap.

### Detailed Description

One or more non-limiting examples will now be described, by way of example only, and with reference to the accompanying figures in which:
Figure 1 is a schematic diagram of a system according to an example of the present disclosure in use at an airport departure gate; and
Figure 2 is a flow diagram illustrating operation of the system of Figure 1.

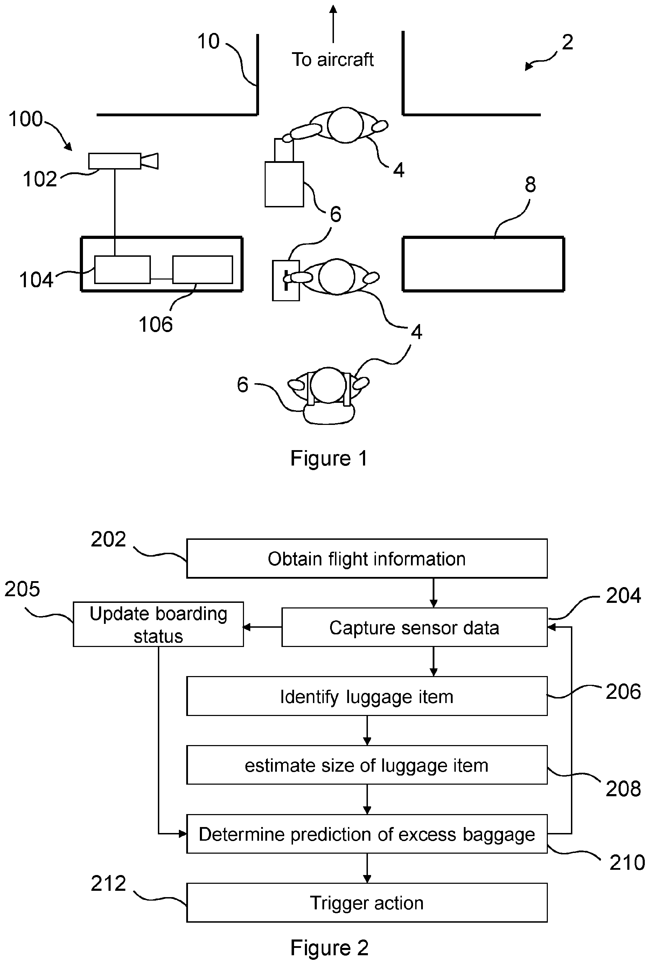

Figure 1 shows an airport departure gate area 2. A plurality of passengers 4 are shown in the process of boarding an aircraft (not shown). The passengers 4 are carrying various different items of luggage 6.

To board the aircraft, the passengers 4 move past a counter 8 where boarding documents may be checked manually or automatically and then through a doorway 10, e.g. on to a jet bridge or another route leading to the aircraft. Although only three passengers 4 are shown in Figure 1, a boarding process for a typical passenger aircraft can involve several hundred passengers.

Typically, each passenger is allowed to bring into the cabin luggage up to a cabin luggage allowance (e.g. set by size and/or weight limits). However, aircraft often do not feature sufficient luggage storage capacity in the cabin for every passenger to utilise their entire cabin luggage allowance. It is therefore possible for the luggage storage capacity of the cabin to be exhausted before all passengers have boarded. The luggage 6 carried by the passengers varies in type and shape, which can make it very difficult for airport staff to identify ahead of time whether there will be sufficient room on the aircraft to store everyone's cabin bags.

A system 100 for assisting boarding is therefore provided in the departure gate area 2. The system 100 comprises a sensor device 102, a processing device 104 and a user interface 106. In this example the sensor device 102 is a camera and the user interface 106 comprises an electronic display and a user input such as a keyboard or mouse.

The operation of the system 100 will now be described with additional reference to the flow diagram of Figure 2.

In a first step 202, performed before the first passenger 4 boards the flight, the processing device 104 obtains information about the aircraft being boarded. This information may include the aircraft type, the route being flown, the departure date and time, the duration of the flight, the number of passengers expected and the number of bags that have been checked in. The information may be retrieved from a separate computer system (not shown) or provided to the processing device 104 by a user via the user interface 106.

In step 204, the camera 102 captures sensor data (images) of a first passenger 4 and their luggage 6 as they move from the counter 8 to the doorway 10. This arrangement ensures that only passengers 4 who are boarding the aircraft are captured.

The sensor data is sent to the processing device 104, and in step 205 the processing device 104 uses the sensor data to update a boarding status, e.g. to increment a cumulative total of boarded passengers by one. In step 206 the processing device 104 analyses the sensor data (e.g. using a computer vision algorithm) to identify the presence of the luggage item 6. In step 208, the processing device 104 estimates the size of the luggage item 6 (e.g. described by its height, width, depth and/or volume).

In step 210, the processing device 104 processes the estimated size of the luggage item and the information relating to the aircraft using a machine learning algorithm to determine a prediction of whether the luggage capacity in the cabin of the aircraft will be exceeded when all passengers 4 have boarded. For instance, the machine learning algorithm may comprise a neural network which accepts the estimated size of the luggage item and the information relating to the aircraft as inputs, and produces the predication as an output.

Finally, in step 212 the processing device 104 triggers one or more actions based on the prediction determined in step 210. For instance, if the prediction is that the luggage capacity in the cabin of the aircraft will be exceeded when all passengers 4 have boarded, the processing device 104 may trigger the issuing of an alert to airport staff via the user interface 106. The airport staff can then take pre-emptive measures such as reducing passenger cabin baggage allowances.

The process repeats each of steps 204, 206, 208 and 210 each time a new passenger 4 passes the camera 102. Thus step 210 comprises the processing device 210 repeatedly updating the prediction of whether the luggage capacity in the cabin of the aircraft will be exceeded when all passengers 4 have boarded.

The prediction may be provided with a confidence level, i.e. a measure of uncertainty in the prediction. For instance, when only a small number of passengers 4 have passed by the camera 102, the prediction may be very uncertain as it is based on only a small number of identified luggage items. Conversely, later on in the boarding process once lots of data has been gathered, the system may be more confident in the prediction. The confidence level may comprise an estimate of the likelihood that the prediction is correct.

The processing device 104 takes into account the confidence in the prediction when deciding whether to trigger an action in step 212. For instance, the processing device 104 may take no action unless the prediction has a confidence level above a threshold value (e.g. a likelihood above 50%). The processing device 104 may take different actions depending on the confidence level of the prediction. For instance, if an uncertain prediction is that the luggage capacity in the cabin of the aircraft will be exceeded when all passengers 4 have boarded, the processing device 104 may cause the user interface to issue a low level warning to airport staff that does not recommend any corrective measures. However, if the same prediction is determined with a high level of confidence, the processing device 104 may cause the user interface to issue a stronger alert to airport staff, e.g. instructing them to reduce baggage allowances.

The processing device 104 may be arranged to output predictions and their confidence levels to the user interface, e.g. to allow airport staff to monitor continuously the predictions during boarding.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of the disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. A system for assisting boarding of a passenger aircraft, the system comprising:
a sensor device arranged to capture sensor data relating to one or more passengers boarding the aircraft;
a processing device arranged to:
obtain information relating to the aircraft;
use the sensor data to identify one or more luggage items carried by the one or more passengers and estimate a size of each of the one or more luggage items;
process the estimated sizes of the one or more luggage items and the information relating to the aircraft using a machine learning algorithm to determine a prediction of whether the luggage capacity in a cabin of the aircraft will be exceeded when all passengers have boarded; and
trigger the performance of one or more actions which influence the boarding of the aircraft based on said prediction.

2. The system of claim 1, wherein the sensor device is arranged to capture the sensor data as or after passengers pass through a boarding threshold.

3. The system of any preceding claim, wherein the sensor device comprises an imaging device such as a camera.

4. The system of any preceding claim, comprising a plurality of sensor devices arranged to capture sensor data relating to one or more passengers boarding the aircraft.

5. The system of any preceding claim, wherein the processing device is arranged to trigger, in response to a prediction that the luggage capacity will be exceeded, the performance of one or more actions selected from the following: issuing an update, warning or alert to airport staff, making one or more automatic passenger announcements, and causing the boarding process to be paused.

6. The system of any preceding claim, wherein the processing device is arranged to trigger, in response to a prediction that the luggage capacity will not be exceeded, the performance of one or more actions selected from the following: issuing an update, warning or alert to airport staff or making one or more automatic passenger announcements.

7. The system of any preceding claim, comprising a user interface that can be controlled by the processing device to issue visual or audible update, warning or alert in response to the prediction.

8. The system of any preceding claim, wherein the prediction is determined based in using sensor data relating to less than 25% of a total number of passengers boarding the aircraft.

9. The system of any preceding claim, wherein the machine learning algorithm is arranged to take into account a boarding status when determining the prediction.

10. The system of any preceding claim, wherein the sensor device is arranged to capture further sensor data relating to one or more further passengers and the processing device is arranged to:
use the further sensor data to identify one or more further luggage items carried by the one or more further passengers and estimate a size of each of the one or more further luggage items; and
process the estimated sizes of the one or more luggage items and the information relating to the aircraft using the machine learning algorithm to determine one or more additional predictions of whether the luggage capacity in a cabin of the aircraft will be exceeded when all passengers have boarded.

11. The system of claim 10, wherein the one or more predictions take into account one or more actions that have been performed in response to a previous prediction.

12. The system of any preceding claim, wherein the information relating to the aircraft comprises one or more details of the aircraft itself and/or one or more details of a flight that the aircraft is about to perform.

13. The system of any preceding claim, wherein the machine-learning algorithm is trained using training data comprising a series of sizes of luggage items, information relating to an aircraft, and an indication of whether said luggage items exceed a luggage capacity in a cabin of the aircraft.

14. A method of boarding a passenger aircraft, the method comprising:
obtaining information relating to the aircraft;
capturing sensor data relating to one or more passengers boarding the aircraft;
using the sensor data to identify one or more luggage items carried by the one or more passengers and estimate a size of each of the one or more luggage items;
processing the estimated sizes of the one or more luggage items and the information relating to the aircraft using a machine learning algorithm to determine a prediction of whether a luggage capacity in a cabin of the aircraft will be exceeded when all passengers have boarded; and
performing one or more actions which influence the boarding of the aircraft based on said prediction.
